# EUROPEAN PATENT SPECIFICATION

(11) **EP 2 843 826 B1**
(45) Date of publication and mention of the grant of the patent: **05.09.2018**
(21) Application number: 14177064.4
(22) Date of filing: 15.07.2014
(51) Int. Cl.: H02P 7/28, B60T 8/17, B60L 3/10

(54) **Method and apparatus for controlling induction motor of train**
Verfahren und Vorrichtung zur Steuerung des Induktionsmotors eines Zuges
Procédé et appareil de commande de moteur à induction de train

(30) Priority: 29.08.2013 JP 2013178612
(43) Date of publication of application: 04.03.2015
(73) Proprietor: Hitachi, Ltd., Tokyo (JP)
(72) Inventor: Tokushima, Takumi, Chiyoda-ku, Tokyo 100-8280 (JP); Sagawa, Akira, Chiyoda-ku, Tokyo 100-8280 (JP); Okawara, Hiroshi, Chiyoda-ku, Tokyo 100-8280 (JP)
(74) Representative: Gill, Stephen Charles

(56) References cited:
- EP-A1- 0 594 130
- EP-A2- 0 452 898
- EP-A2- 0 486 996
- US-A- 3 983 463
- US-A- 4 335 337
- US-A- 4 686 434
- US-A- 4 825 131

## Description

### BACKGROUND OF THE INVENTION

### 1. Field of the Invention

The present invention relates to an induction motor type electric train and a control method for the same, and particularly relates to an induction motor type electric train configured in such a way that electricity is supplied to plural induction motors from a single power converter (hereinafter, this electric train is referred to as a plural-induction motor type electric train) and a control method suitably applied thereto.

### 2. Description of the Related Art

A plural-induction motor type electric train has one or plural power converters which convert electric power acquired from an overhead power line via a pantograph to three-phase AC power with variable voltage and variable frequency, and plural induction motors each of which is driven by the three-phase AC power supplied from the same power converter. The plural-induction motor type electric train runs, based on the power that is acquired when these plural induction motors are driven.

Normally, the output frequency of the power converter mounted on such a plural-induction motor type electric train is set by adding or subtracting a slip frequency to or from a rotor frequency that is equivalent to the rotational frequency of the induction motors.

In this case, if a maximum value of the rotational frequencies of the plural induction motors is used as the rotor frequency, the rotational frequency of the slip axis of a slip that occurs during powering is used for current control. If a minimum value is used, the rotational frequency of the skid axis of a skid that occurs during regeneration is used for current control. In both cases, the use of the rotational frequency causes a fall in re-adhesion.

Therefore, as the rotor frequency, it is often the case that a rotational frequency of the induction motors that is not the maximum rotational frequency or the average value of the rotational frequencies of the respective induction motors is used at the time of powering, whereas a rotational frequency of the induction motors that is not the minimum rotational frequency or the average value of the rotational frequencies of the respective induction motors is used at the time of regeneration.

The slip frequency can be set by adding or subtracting a slip frequency correction value calculated on the basis of the difference between a target value of the current that should be supplied to each induction motor from the power converter (a current value corresponding to a notch command based on a train driver's notch operation, and this value is hereinafter referred to as a current command value) and the measured value of the current actually supplied to each induction motor from the power converter (hereinafter this value is referred to as an induction motor current feedback value), to or from a basic command corresponding to the torque that is required at the time (torque of the magnitude corresponding to the notch command, and this torque is hereinafter referred to as required torque).

Also, JP-A-63-117605 discloses a method in which a maximum current value of currents supplied to respective induction motors in a plural-induction motor type electric train having a current detector in all of the induction motors is used as the above induction motor current feedback value.

Meanwhile, the plural-induction motor type electric train as described above has a problem that overcurrent is generated in part of the plural induction motors supplied with electricity from the same power converter. When overcurrent is generated in the induction motors, particularly in an electric train in which the induction motors are driven for a long time in a high-speed range as in a high-speed train, overheat of the induction motors due to the overcurrent is problematical in terms of safety.

US 4825131 proposes a system for controlling an inverter on the basis of an operating frequency command determined by adding or subtracting a slip frequency command to or from a motor speed and a voltage command proportional to the operating frequency command.

Also US 4686434 proposes an electric vehicle monitoring system, and EP 0594130 proposes rolling stock control equipment.

### SUMMARY OF THE INVENTION

In view of the foregoing circumstances, it is an object of the invention to provide an induction motor type electric train in which overheat of induction motors due to overcurrent can be prevented effectively to improve safety, and a control method for the same.

According to an aspect of the invention, an induction motor type electric train according to claim 1 is provided.

According to another aspect of the invention, a control method for an induction motor type electric train according to claim 4 is provided.

According to the invention, overcurrent to the induction motors is restrained and therefore overheat of the induction motors due to overcurrent can be prevented effectively. Thus safety can be improved.

### BRIEF DESCRIPTION OF THE DRAWINGS

FIG. 1 shows characteristic curves representing the relation between slip frequency of an ordinary induction motor, and tractive effort, braking effort and induction motor current.
FIG. 2 shows characteristic curves representing the relation between slip frequency of a low-slip induction motor, and tractive effort, braking effort and induction motor current.
FIG. 3 is a block diagram showing the connection between a power converter and induction motors in a plural-induction motor type electric train according to an embodiment.
FIG. 4 is a block diagram showing the configuration of a power converter control unit in the plural-induction motor type electric train according to the embodiment.
FIG. 5 shows characteristic curves representing the relation between output voltage of a power converter, output torque of an induction motor, and induction motor current in an ordinary plural-induction motor type electric train.
FIG. 6 shows characteristic curves representing the relation between output voltage of a power converter, output torque of an induction motor, and induction motor current in the case where control is performed on a constant-torque area to a characteristic area of the induction motor.

### DESCRIPTION OF THE PREFERRED EMBODIMENTS

Hereinafter, an embodiment of the invention will be described in detail with reference to the drawings.

### (1) Relation between slip frequency, current and torque in induction motor

If each wheel driven by each of plural induction motors supplied with electricity from a power converter has a different wheel diameter, the output frequency of the power converter is the same to each induction motor, whereas the rotational frequencies of the individual induction motors are different from each other due to the wheel diameters thereof and therefore the slip frequency differs between the individual induction motors. Also, the difference in rotational frequency between the induction motors due to the difference in wheel diameter increases with an increase in the speed of the plural-induction motor type electric train.

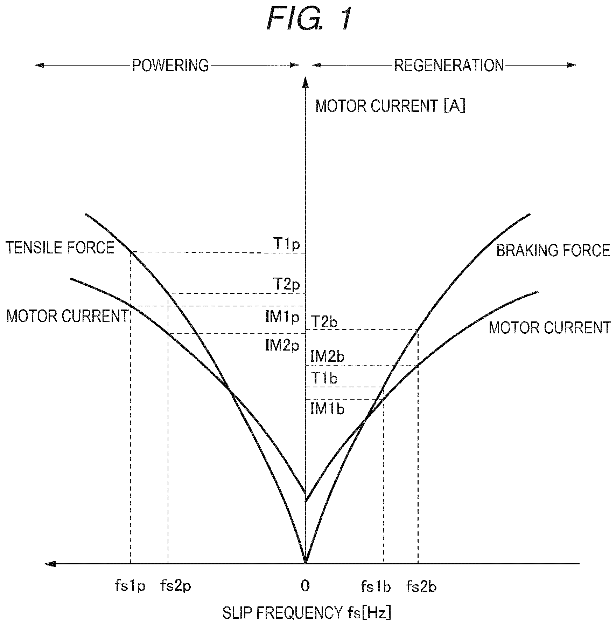

Generally, in the plural-induction motor type electric train, the slip frequency of an induction motor, the current supplied to the induction motor, and the torque generated by the induction motor are in the relation as shown in FIG. 1. As clear from FIG. 1, if the wheels have different wheel diameters, at the time of powering, high current and torque are generated in an induction motor with a high slip frequency (driving a wheel with a large wheel diameter), and at the time of regeneration, high current and torque are generated in an induction motor with a low slip frequency (driving a wheel with a small wheel diameter) . That is, if each wheel driven by each induction motor has a different wheel diameter, higher current and torque are generated in an induction motor having a larger absolute value of slip frequency.

Conventionally, in the plural-induction motor type electric train, the foregoing current command value generated in accordance with a notch command based on a train driver's notch operation or a braking command based on a braking operation has a standard value in the case where there is no difference in wheel diameter between the wheels driven by each induction motor supplied with electricity from the same power converter. Therefore, if these wheels have different wheel diameters, when the power converter is controlled in such a way that the average current value of the plural induction motors flows to each induction motor as an induction motor current feedback value, higher current than the standard value flows to one or some induction motors.

In this case, in an electric train in which the induction motors are driven for a long time in a high-speed range, for example, as in a high-speed train, the state where there is a large difference in the current supplied to the induction motors from the power converter continues for a long time. Therefore, in the induction motors having a large absolute value of slip frequency, the problem of overheat due to an increase in heat loss arises.

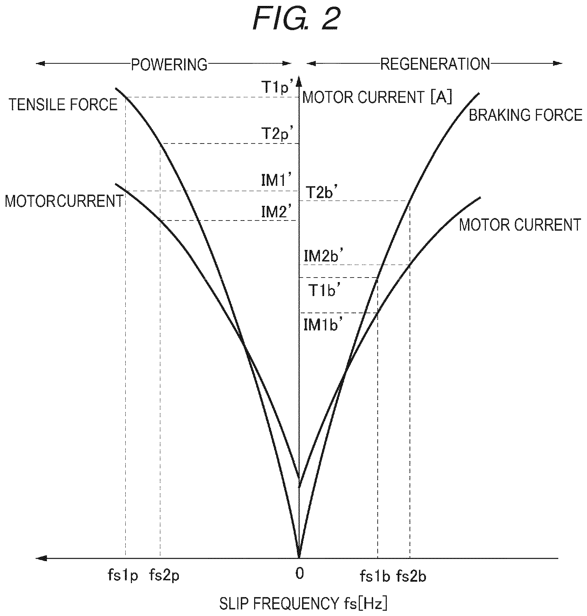

Also, in the case of induction motors called a low-slip type in which the proportion of the change in motor current to the change in slip frequency is high, the difference in current value between the induction motors is large in relation to the difference in wheel diameter of the wheels, as shown in FIG. 2. Therefore, overheat of the induction motors is a more serious problem.

Thus, in the plural-induction motor type electric train of this embodiment, if there is a large difference in wheel diameter between wheels driven by each of plural induction motors supplied with electricity from one power converter, the current value supplied to each induction motor from the power converter is limited. Hereinafter, details of the plural-induction motor type electric train of this embodiment with such characteristics will be described.

### (2) Configuration of plural-induction motor type electric train according to this embodiment

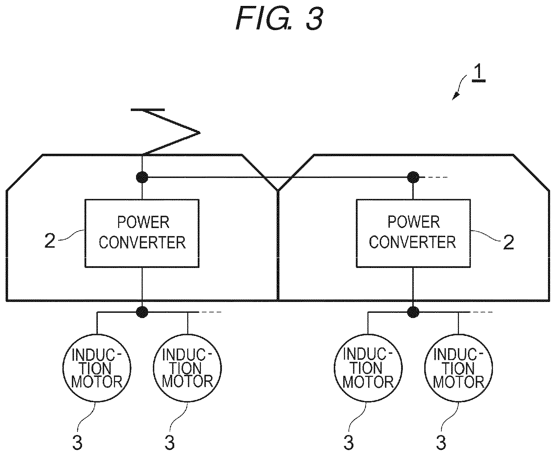

FIG. 3 shows an overall image of a plural-induction motor type electric train 1 according to this embodiment. This plural-induction motor type electric train 1 has one or plural power converters 2, and plural induction motors 3 are connected to each of the power converter(s) 2.

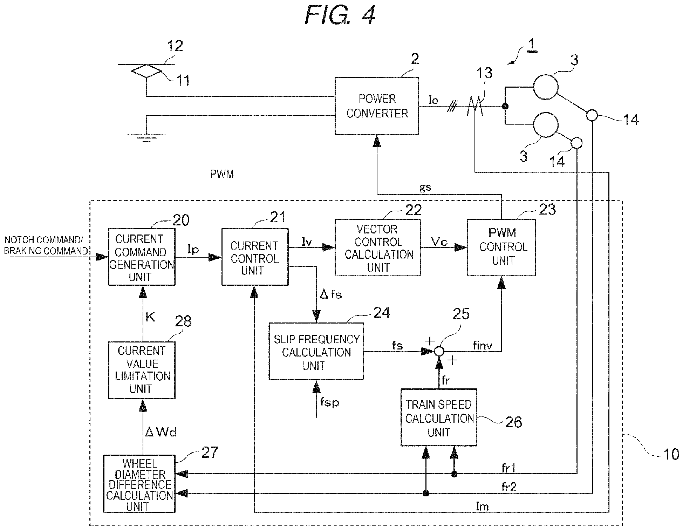

FIG. 4 shows an example of the configuration of the power system in the plural-induction motor type electric train 1. In the case of this plural-induction motor type electric train 1, DC power received from an overhead power line 12 via a pantograph 11 is provided to the power converter 2.

The power converter 2 has plural switching devices and turns on and off these switching devices in accordance with a gate signal gs provided from a power converter control unit 10, thus converting DC power acquired from the overhead power line 12 to three-phase AC power with variable voltage and variable frequency. The power converter 2 also supplies the three-phase AC power acquired by such conversion to each of the induction motors 3 connected to the power converter 2 itself, thus driving these induction motors 3.

In this case, the current value of an output current Io of the power converter 2 is detected by a current detector 13 and sent to the power converter control unit 10 as an induction motor current feedback value Im. The rotational frequency of each induction motor 3 is detected by each speed detector 14 provided corresponding to each of these induction motors 3 and is sent to the power converter control unit 10.

In the power converter control unit 10, a notch command corresponding to a train driver's notch operation or a braking command corresponding to a braking operation is inputted to a current command generation unit 20. Based on the supplied notch command or braking command, the current command generation unit 20 generates a current command value corresponding to a current value that should be a target value of the output current Io of the power converter 2. The current command generation unit 20 also multiplies the generated current command value by a correction coefficient K sent from a current value limitation unit 28, later described, and sends out the result of the multiplication to a current control unit 21 as an induction motor current command value Ip.

The current control unit 21 generates a vector conversion current Iv for causing the induction motor current feedback value Im from the current detector 13 to follow the induction motor current command value Ip from the current command generation unit 20, and sends out the generated vector conversion current Iv to a vector control calculation unit 22.

The vector control calculation unit 22 calculates a modulation rate Vc for causing the output current Io of the power converter 2 to have a proper value, based on the vector conversion current Iv provided from the current control unit 21, and sends out the calculated modulation rate Vc to a PWM (pulse width modulation) control unit 23.

The current control unit 21 also generates a slip frequency correction value Δfs that includes a correction value for correcting a slip frequency fs of the induction motor 3, based on the difference between the induction motor current command value Ip and the induction motor current feedback value Im, and sends out the generated slip frequency correction value Δfs to a slip frequency calculation unit 24.

The slip frequency calculation unit 24 adds the slip frequency correction value Δfs provided from the current control unit 21 to a basic slip frequency command value fsp that is set in advance according to the required torque, thereby calculates an average slip frequency fs of each induction motor 3, and sends out the calculated slip frequency fs to an addition/subtraction circuit 25.

At this point, the addition/subtraction circuit 25 is also provided with an average rotor frequency fr of each induction motor 3 that is calculated by a train speed calculation unit 26 based on the rotational frequencies fr1, 2, ... of the respective induction motors 3 detected by the respective speed detectors 14.

In this way, the addition/subtraction circuit 25 adds the slip frequency fs to the rotor frequency fr at the time of powering and subtracts the slip frequency fs from the rotor frequency fr at the time of regenerative braking. The addition/subtraction circuit 25 thus calculates a target output frequency finv that is a target value of the output frequency of the power converter 2, and outputs the calculated target output frequency finv to the PWM control unit 23.

Based on the modulation rate Vc sent from the vector control calculation unit 22 and the target output frequency finv sent from the addition/subtraction circuit 25, the PWM control unit 23 generates a gate signal gs for on/off control of the switching devices in the power converter 2 in such a way that the current value of the output current Io of the power converter 2 becomes the induction motor current command value Ip outputted from the current command generation unit 20 and the output frequency of the power converter 2 becomes the target output frequency finv provided from the addition/subtraction circuit 25. The PWM control unit 23 sends the generated gate signal gs to the power converter 2.

Meanwhile, the rotational frequencies of the respective induction motors 3 detected by the respective speed detectors 14 are also provided to a wheel diameter difference calculation unit 27. Based on the rotational frequencies of the induction motors 3 corresponding to and sent from the respective speed detectors 14, the wheel diameter difference calculation unit 27 calculates a maximum value of diameter difference (hereinafter referred to as a wheel diameter difference) ΔWd of the wheels (not shown) driven by the respective induction motors 3, and sends out the calculated wheel diameter difference ΔWd to the current value limitation unit 28.

Based on the wheel diameter difference ΔWd sent from the wheel diameter difference calculation unit 27, the current value limitation unit 28 sends "1" as a correction coefficient K to the current command generation unit 20 if the wheel diameter difference ΔWd is smaller than a predetermined threshold (hereinafter referred to as wheel diameter difference threshold). If the wheel diameter difference ΔWd is equal to or greater than the wheel diameter difference threshold, the current limitation unit 28 sends out a smaller numeric value (for example, 0.8 to 0.9) than "1", which is preset as the correction coefficient K. Thus, the current command generation unit 20 multiplies the current command value generated according to the notch command, by this correction coefficient K, and sends out the result of the multiplication to the current control unit 21 as the induction motor current command value Ip, as described above.

In this embodiment, the value of the correction coefficient K sent out from the current value limitation unit 28 to the current command generation unit 20 is set (for example, to approximately 0.8 to 0.9) so that the current value of the current flowing to the induction motor 3 having the largest absolute value of the slip frequency fs in the case where the wheel diameter difference ΔWd is equal to or greater than the wheel diameter difference threshold becomes equal to or lower than the current value of the current flowing to each of the induction motors 3 in the case where there is no wheel diameter difference ΔWd. While it is desirable that the value of K is set on the basis of the induction motor 3 having the largest absolute value of the slip frequency fs in the case where the wheel diameter difference ΔWd is equal to or greater than the wheel diameter difference threshold as described above, the effects of the invention can be achieved to a certain extent by setting the value of K on the basis of an induction motor 3 having a significantly large absolute value of the slip frequency fs.

### (3) Effects of embodiment

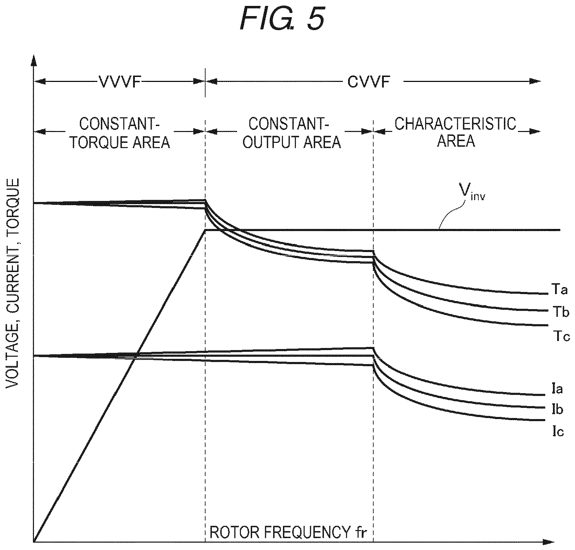

FIG. 5 shows the relation between an output voltage Vinv of the power converter in the conventional plural-induction motor type electric train where the current limitation as described above is not carried out, currents Ia to Ic flowing to the induction motors supplied with electricity from the power converter, and output torques Ta to Tc of the induction motors based on the currents Ia to Tc. FIG. 5 shows the case where constant-torque control is carried out until the rotor frequency reaches a constant-voltage variable-frequency CVVF area. After the rotor frequency passes a VVVF area, control is performed in such a way that the currents Ia to Ic flowing to the induction motors increase in proportion to the rotor frequency fr.

In FIG. 5, Ib represents the current (design value) flowing to each induction motor in the case where there is no wheel diameter difference between the wheels driven by the respective induction motors. Ia represents the current flowing to an induction motor having a larger absolute value of the slip frequency than the slip frequency in the case where there is no wheel diameter difference. Ic represents the current flowing to an induction motor having a smaller absolute value of the slip frequency fs than the slip frequency in the case where there is no wheel diameter difference. Also, in FIG. 5, Tb represents the output torque (reference value) of each induction motor in the case where there is no wheel diameter difference between the wheels driven by the plural induction motors respectively. Ta represents the torque generated in an induction motor having a larger absolute value of the slip frequency than the slip frequency in the case where there is no wheel diameter difference. Tc represents the torque generated in an induction motor having a smaller absolute value of the slip frequency than the slip frequency in the case where there is no wheel diameter difference. As clear from FIG. 5, the current Ia flowing to the induction motor having the large absolute value of the slip frequency is higher than the current Ib flowing to each induction motor in the case where there is no wheel diameter difference between the wheels driven by the plural induction motors respectively. Thus, by limiting the output current Io of the power converter 2 in such a way that the current Ia flowing to the induction motor 3 having the largest absolute value of the slip frequency fs becomes equal to or lower than the current Ib flowing to the induction motors 3 in the case where there is no wheel diameter difference ΔWd, as in this embodiment, the currents Ia to Ic flowing to the respective induction motors 3 can be made equal to or lower than the standard value. Thus, overcurrent can be restrained in all of the induction motors 3 and overheat of the induction motors 3 due to overcurrent can be prevented effectively. This enables improvement in safety of the plural-induction motor type electric train.

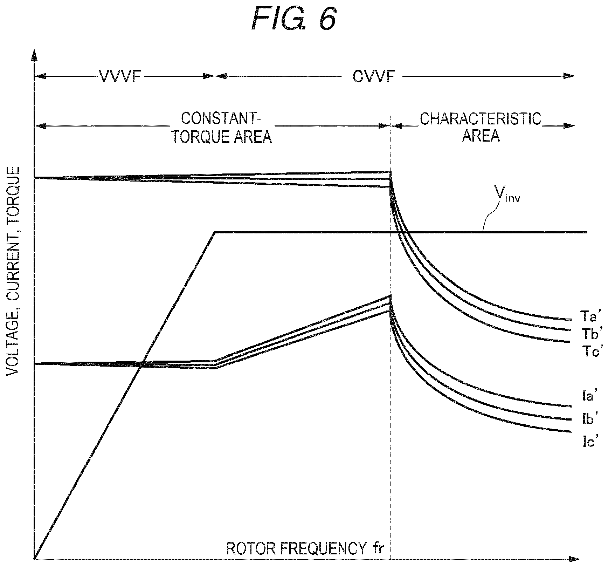

FIG. 6 shows the case where control is performed on a constant-torque area to a characteristic area of the induction motors 3. In this case, too, correction can be executed similarly to the above. In FIG. 6, Ia' to Ic' represent the current values of the induction motors 3 in the same cases as Ia to Ic in FIG. 5, and Ta' to Tc' represents the torques generated by the induction motors 3 in the same cases as Ta to Tc in FIG. 5.

In this plural-induction motor type electric train 1, since the operation condition of the current value limitation unit 28 is that the wheel diameter difference ΔWd is equal to or greater than a predetermined value (wheel diameter difference threshold), the difference in current value between the induction motors 3 can be allowed up to a predetermined value and therefore a fall in the torque due to current limitation can be restrained.

### (4) Other embodiments

In the above embodiment, the case where the value of the correction coefficient K provided from the current value limitation unit 28 to the current command generation unit 20 is 0.8 to 0.9 when the wheel diameter difference ΔWd is equal to or greater than the wheel diameter difference threshold, is described. However, the invention is not limited to this case and other values less than 1 can be broadly applied. In such a case, since the wheel diameter difference ΔWd is generally managed on a wagon, carriage or train basis, an unnecessary decrease in current value can be prevented if the amount of current limitation by the current value limitation unit 28 is about the maximum value of the difference in current value that can occur between the plural induction motors 3 supplied with electricity from the single power converter 2.

Also, while the above embodiment is described in terms of the case where the overhead power line 12 is a DC power line, the invention is not limited to this case and the invention can also be applied to the case where the overhead power line 12 is an AC power line and where a power converter having the function of converting AC power supply to DC power supply is used as the power converter 2.

Moreover, while the above embodiment is described in terms of the case where the voltage/frequency control unit which controls the output voltage and the output frequency of the power converter 2 on the basis of the induction motor current command value Ip outputted from the current command generation unit 20, the output current of the power converter 2 detected by the current detector 13 and the rotational frequencies of the respective induction motors 3 detected by the speed detectors 14, is formed by the current control unit 21, the vector control calculation unit 22, the PWM control unit 23, the slip frequency calculation unit 24, the addition/subtraction circuit 25 and the train speed calculation unit 26, the invention is not limited to this case and various other configurations can be employed.

The invention can be broadly applied to plural-induction motor type electric trains of various configurations.

## Claims

1. An induction motor type electric train (1) comprising:
a power converter (2) which converts electric power acquired from an overhead power line (12) to three-phase AC power with variable voltage and variable frequency;
plural induction motors (3) which are supplied with electricity from the power converter and drive different wheels from each other, the electricity from the power converter being supplied on a supply line which branches into respective sub-lines for onward supply of the electricity to the induction motors;
a current detector (13) which detects a current value of output current (I_{ο}) of the power converter on the supply line before it branches into the sub-lines;
plural speed detectors (14) which are provided corresponding to each of the plural induction motors and detect rotational frequencies of the corresponding induction motors; and
a power converter control unit (10) which generates an induction motor current command value (Iₚ) that is a target value of the output current of the power converter, and controls the power converter in such a way that the output current of the power converter follows the induction motor current command value, using the output current of the power converter detected by the current detector and the rotational frequency (fᵣ₁, fᵣ₂) detected by each of the speed detectors;
wherein the power converter control unit limits a magnitude of the induction motor current command value so as to restrain overcurrent to the induction motors due to a wheel diameter difference between the wheels driven by each of the induction motors, based on the rotational frequency detected by each of the speed detectors; and
wherein the power converter control unit limits a magnitude of the induction motor current command value in such a way that a value the current flowing to the induction motor having a largest absolute value of slip frequency, based on the rotational frequency detected by each of the speed detectors, becomes equal to or smaller than a value of what the current flowing to the induction motor would be when there is no wheel diameter difference.

2. The induction motor type electric train according to claim 1, wherein the power converter control unit limits a magnitude of the induction motor current command value when a wheel diameter difference between the respective wheels driven by the plural induction motors, calculated on the basis of the rotational frequency detected by each of the speed detectors, is equal to or greater than a predetermined threshold.

3. The induction motor type electric train according to claim 1 or 2, wherein the power converter control unit generates a current command value of a magnitude corresponding to a train driver's driving operation, and multiplies the generated current command value by a correction coefficient (K) corresponding to a wheel diameter difference between the wheels driven by the respective induction motors, thus generating the induction motor current command value, and
the correction coefficient is 1 if a maximum value of the wheel diameter difference between the respective wheels driven by the plural induction motors is below a predetermined threshold, and the correction coefficient is a value below 1 if the maximum value is equal to or above the threshold.

4. A control method for an induction motor type electric train (1) having a power converter (2) which converts electric power acquired from an overhead power line (12) to three-phase AC power with variable voltage and variable frequency and plural induction motors (3) which are supplied with electricity from the power converter and drive different wheels from each other, the electricity from the power converter being supplied on a supply line which branches into respective sub-lines for onward supply of the electricity to the induction motors, the method comprising:
a first step in which a current value of output current (I_{ο}) of the power converter and a rotational frequency (fᵣ₁, fᵣ₂) of each of the plural induction motors are detected, the current value of output current (I_{ο}) of the power converter being detected on the supply line before it branches into the sub-lines; and
a second step in which an induction motor current command value (Iₚ) that is a target value of the output current of the power converter is generated and the power converter is controlled in such a way that the output current of the power converter follows the induction motor current command value, based on the output current of the power converter detected in the first step and the rotational frequency that is detected of each of the plural induction motors;
wherein in the second step, a magnitude of the induction motor current command value is limited so as to restrain overcurrent to the induction motors due to a wheel diameter difference between the wheels driven by each of the induction motors, based on the rotational frequency detected in the first step; and
wherein in the second step, a magnitude of the induction motor current command value is limited in such a way that a value of the current flowing to the induction motor having a largest absolute value of slip frequency, based on the rotational frequency detected in the first step, becomes equal to or smaller than a value of what the current flowing to the induction motor would be when there is no wheel diameter difference.

5. The control method for the induction motor type electric train according to claim 4, wherein in the second step, a magnitude of the induction motor current command value is limited when a wheel diameter difference between the respective wheels driven by the plural induction motors, calculated on the basis of the rotational frequency detected in the first step, is equal to or greater than a predetermined threshold.

6. The control method for the induction motor type electric train according to claim 4 or 5, wherein in the second step, a current command value of a magnitude corresponding to a train driver's driving operation is generated, and the generated current command value is multiplied by a correction coefficient (K) corresponding to a wheel diameter difference between the respective wheels driven by the plural induction motors, thus generating the induction motor current command value, and
the correction coefficient is 1 if a maximum value of the wheel diameter difference between the respective wheels driven by the plural induction motors is below a predetermined threshold, and the correction coefficient is a value below 1 if the maximum value is equal to or above the threshold.

## Patentansprüche

1. Elektrischer Eisenbahnzug des Induktionsmotortyps (1), umfassend:
einen Leistungswandler (2), der elektrische Leistung, die aus einer Freileitung (12) bezogen wird, in eine Drei-Phasen-WS-Leistung mit variabler Spannung und variabler Frequenz umwandelt;
mehrere Induktionsmotoren (3), denen Elektrizität aus dem Leistungswandler zugeführt wird und die voneinander unterschiedliche Räder antreiben, wobei die Elektrizität aus dem Leistungswandler auf einer Versorgungsleitung zugeführt wird, die sich in jeweilige untergeordnete Leitungen für eine weitere Zuführung der Elektrizität zu den Induktionsmotoren verzweigt;
einen Stromdetektor (13), der einen Stromwert von Ausgangsstrom (Iₒ) des Leistungswandlers auf der Versorgungsleitung detektiert, bevor sich diese in die untergeordneten Leitungen verzweigt;
mehrere Drehzahldetektoren (14), die entsprechend jedem der mehreren Induktionsmotoren vorgesehen sind und Drehfrequenzen der entsprechenden Induktionsmotoren detektieren; und
eine Leistungswandlersteuerungseinheit (10), die einen Induktionsmotorstrombefehlswert (Iₚ) erzeugt, der ein Zielwert des Ausgangsstroms des Leistungswandlers ist, und den Leistungswandler derart steuert, dass der Ausgangsstrom des Leistungswandlers dem Induktionsmotorstrombefehlswert folgt, wobei der Ausgangsstrom des Leistungswandlers, der durch den Stromdetektor detektiert wird, und die Drehfrequenz (fᵣ₁, fᵣ₂), die durch jeden der Drehzahldetektoren detektiert wird, verwendet werden;
worin die Leistungswandlersteuerungseinheit eine Größe des Induktionsmotorstrombefehlswerts begrenzt, sodass ein Überstrom in den Induktionsmotoren aufgrund einer Raddurchmesserdifferenz zwischen den von jedem der Induktionsmotoren angetriebenen Rädern auf Basis der von jedem der Drehzahldetektoren detektierten Drehfrequenz niedrig gehalten wird; und
worin die Leistungswandlersteuerungseinheit eine Größe des Induktionsmotorstrombefehlswerts derart begrenzt, dass ein Wert des Stroms, der zum Induktionsmotor fließt, der einen größten absoluten Wert von Schlupffrequenz auf Basis der von jedem der Drehzahldetektoren detektierten Drehfrequenz aufweist, gleich einem oder kleiner als ein Wert ist, bei dem der Strom, der zum Induktionsmotor fließt, sein würde, wenn keine Raddurchmesserdifferenz vorliegt.

2. Elektrischer Eisenbahnzug des Induktionsmotortyps gemäß Anspruch 1, worin die Leistungswandlersteuerungseinheit eine Größe des Induktionsmotorstrombefehlswerts begrenzt, wenn eine Raddurchmesserdifferenz zwischen den von den mehreren Induktionsmotoren angetriebenen, jeweiligen Rädern, die auf Basis der von jedem der Drehzahldetektoren detektierten Drehfrequenz berechnet wird, gleich einem oder größer als ein vorbestimmter Schwellenwert ist.

3. Elektrischer Eisenbahnzug des Induktionsmotortyps gemäß Anspruch 1 oder 2, worin die Leistungswandlersteuerungseinheit einen Strombefehlswert einer Größe erzeugt, welcher dem Fahrbetrieb eines Zugführers entspricht, und die den erzeugten Strombefehlswert mit einem Korrekturkoeffizienten (K), der einer Raddurchmesserdifferenz zwischen den von den jeweiligen Induktionsmotoren angetriebenen Rädern entspricht, multipliziert, wobei der Induktionsmotorstrombefehlswert erzeugt wird, und
worin der Korrekturkoeffizient 1 ist, wenn ein Maximalwert der Raddurchmesserdifferenz zwischen den von den mehreren Induktionsmotoren angetriebenen, jeweiligen Rädern unterhalb eines vorbestimmten Schwellenwerts ist, und der Korrekturkoeffizient ein Wert unterhalb 1 ist, wenn der Maximalwert gleich dem oder oberhalb des Schwellenwerts ist.

4. Steuerungsverfahren für einen elektrischen Eisenbahnzug des Induktionsmotortyps (1) mit einem Leistungswandler (2), der eine von einer Freileitung (12) bezogene elektrische Leistung in eine Drei-Phasen-WS-Leistung mit variabler Spannung und variabler Frequenz umwandelt, und mehreren Induktionsmotoren (3), denen Elektrizität aus dem Leistungswandler zugeführt wird und die voneinander unterschiedliche Räder antreiben, wobei die Elektrizität aus dem Leistungswandler auf einer Versorgungsleitung zugeführt wird, die sich in jeweilige untergeordnete Leitungen zu einer weiteren Zuführung der Elektrizität zu den Induktionsmotoren verzweigt, wobei das Verfahren Folgendes umfasst:
einen ersten Schritt, in dem ein Stromwert von Ausgangsstrom (Iₒ) des Leistungswandlers und eine Drehfrequenz (fr1, fr2) von jedem der mehreren Induktionsmotoren detektiert werden, wobei der Stromwert des Ausgangsstroms (Iₒ) des Leistungswandlers auf der Versorgungsleitung detektiert wird, bevor sich diese in die untergeordneten Leitungen verzweigt; und
einen zweiten Schritt, in dem ein Induktionsmotorstrombefehlswert (Iₒ), der ein Zielwert des Ausgangsstroms des Leistungswandlers ist, erzeugt wird, und der Leistungswandler derart gesteuert wird, dass der Ausgangsstrom des Leistungswandlers dem Induktionsmotorstrombefehlswert auf Basis des Ausgangsstroms des Leistungswandlers, der im ersten Schritt detektiert wird, und der Drehfrequenz, die von jedem der mehreren Induktionsmotoren detektiert wird, entspricht;
worin im zweiten Schritt eine Größe des Induktionsmotorstrombefehlswerts begrenzt ist, sodass ein Überstrom in den Induktionsmotoren aufgrund einer Raddurchmesserdifferenz zwischen den von jedem der Induktionsmotoren angetriebenen Rädern auf Basis der im ersten Schritt detektierten Drehfrequenz niedrig gehalten wird; und
worin im zweiten Schritt eine Größe des Induktionsmotorstrombefehlswerts derart begrenzt ist, dass ein Wert des Stroms, der zum Induktionsmotor fließt, der einen größten absoluten Wert von Schlupffrequenz aufweist, auf Basis der im ersten Schritt detektierten Drehfrequenz gleich einem oder kleiner als ein Wert ist, bei dem der Strom, der zum Induktionsmotor fließt, sein würde, wenn keine Raddurchmesserdifferenz vorliegt.

5. Steuerungsverfahren für den elektrischen Eisenbahnzug des Induktionsmotortyps gemäß Anspruch 4, worin im zweiten Schritt eine Größe des Induktionsmotorstrombefehlswerts begrenzt ist, wenn eine Raddurchmesserdifferenz zwischen den von den mehreren Induktionsmotoren angetriebenen, jeweiligen Rädern, die auf Basis der im erste Schritt detektierten Drehfrequenz berechnet wird, gleich einem oder größer als ein vorbestimmter Schwellenwert ist.

6. Steuerungsverfahren für den elektrischen Eisenbahnzug des Induktionsmotortyps gemäß Anspruch 4 oder 5, worin im zweiten Schritt ein Strombefehlswert einer Größe, der einem Fahrbetrieb eines Zugführers entspricht, erzeugt wird, und der erzeugte Strombefehlswert mit einem Korrekturkoeffizienten (K), der einer Raddurchmesserdifferenz zwischen den von den mehreren Induktionsmotoren angetriebenen, jeweiligen Rädern entspricht, multipliziert wird, wobei der Induktionsmotorstrombefehlswert erzeugt wird, und
worin der Korrekturkoeffizient 1 ist, wenn ein Maximalwert der Raddurchmesserdifferenz zwischen den von den mehreren Induktionsmotoren angetriebenen, jeweiligen Rädern unterhalb eines vorbestimmten Schwellenwerts ist, und der Korrekturkoeffizient ein Wert unterhalb 1 ist, wenn der Maximalwert gleich dem oder oberhalb des Schwellenwerts ist.

## Revendications

1. Train électrique à moteur à induction (1) comprenant :
un convertisseur de puissance (2) qui convertit l'énergie électrique acquise auprès d'une ligne d'alimentation aérienne (12) en courant alternatif triphasé à tension variable et à fréquence variable ;
plusieurs moteurs à induction (3) qui sont alimentés en électricité par le convertisseur de puissance et qui entraînent différentes roues les unes par rapport aux autres, l'électricité provenant du convertisseur de puissance étant fournie sur une ligne d'alimentation qui se ramifie en sous-lignes respectives destinées à fournir de l'électricité en continu aux moteurs à induction ;
un détecteur de courant (13) qui détecte une valeur de courant du courant de sortie (I_{ο}) du convertisseur de puissance que la ligne d'alimentation avant qu'elle se ramifie en sous-lignes ;
plusieurs détecteurs de vitesse (14) qui sont prévus en correspondance avec chacun de la pluralité de moteurs à induction et qui détectent les fréquences de rotation des moteurs à induction correspondants ;
et
une unité de commande de convertisseur de puissance (10) qui génère une valeur de commande de courant de moteur à induction (Iₚ) qui est une valeur cible du courant de sortie du convertisseur de puissance, et qui contrôle le convertisseur de puissance de sorte que le courant de sortie du convertisseur de puissance suive la valeur de commande de courant de moteur à induction, en utilisant le courant de sortie du convertisseur de puissance détecté par le détecteur de courant et la fréquence de rotation (fᵣ₁, fᵣ₂) détectée par chacun des détecteurs de vitesse ;
dans lequel l'unité de commande de convertisseur de puissance limite une magnitude de la valeur de commande de courant de moteur à induction de façon à limiter la surintensité des moteurs à induction due à une différence de diamètre de roue entre les roues entraînées par chacun des moteurs à induction, sur la base de la fréquence de rotation détectée par chacun des détecteurs de vitesse ; et
dans lequel l'unité de commande de convertisseur de puissance limite une magnitude de la valeur de commande de courant de moteur à induction de sorte qu'une valeur du courant qui circule vers le moteur à induction ayant une valeur absolue la plus élevée de fréquence de glissement, sur la base de la fréquence de rotation détectée par chacun des détecteurs de vitesse, devienne égale ou inférieure à une valeur qui serait celle du courant qui circule vers le moteur à induction s'il n'y avait aucune différence de diamètre de roue.

2. Train électrique à moteur à induction selon la revendication 1, dans lequel l'unité de commande de convertisseur de puissance limite une magnitude de la valeur de commande de courant de moteur à induction lorsqu'une différence de diamètre de roue entre les roues respectives entraînées par la pluralité de moteurs à induction, calculée sur la base de la fréquence de rotation détectée par chacun des détecteurs de vitesse, est égale ou supérieure à un seuil prédéterminé.

3. Train électrique à moteur à induction selon la revendication 1 ou 2, dans lequel l'unité de commande de convertisseur de puissance génère une valeur de commande de courant d'une magnitude qui correspond à une opération de conduite du conducteur d'un train, et multiplie la valeur de commande de courant générée par un coefficient de correction (K) qui correspond à une différence de diamètre de roue entre les roues entraînées par les moteurs à induction respectifs, afin de générer la valeur de commande de courant de moteur à induction, et
le coefficient de correction est de 1 si une valeur maximale de la différence de diamètre de roue entre les roues respectives entraînées par la pluralité de moteurs à induction est inférieure à un seuil prédéterminé, et le coefficient de correction est une valeur inférieure à 1 si la valeur maximale est égale ou supérieure au seuil.

4. Procédé de commande d'un train électrique à moteur à induction (1) ayant un convertisseur de puissance (2) qui convertit l'énergie électrique acquise auprès d'une ligne d'alimentation aérienne (12) en courant alternatif triphasé avec une tension variable et une fréquence variable et plusieurs moteurs à induction (3) qui sont alimentés en électricité par le convertisseur de puissance et qui entraînent différentes roues les unes par rapport aux autres, l'électricité provenant du convertisseur de puissance étant fournie sur une ligne d'alimentation qui se ramifie en sous-lignes respectives destinées à fournir en continu de l'électricité aux moteurs à induction, le procédé comprenant :
une première étape lors de laquelle une valeur de courant du courant de sortie (I_{ο}) du convertisseur de puissance et une fréquence de rotation (fᵣ₁, fᵣ₂) de chacun de la pluralité de moteurs à induction sont détectées, la valeur de courant du courant de sortie (I_{ο}) du convertisseur de puissance étant détectée sur la ligne d'alimentation avant qu'elle se ramifie en sous-lignes ; et
une seconde étape lors de laquelle une valeur de commande de courant de moteur à induction (Iₚ) qui est une valeur cible du courant de sortie du convertisseur de puissance est générée et le convertisseur de puissance est contrôlé de sorte que le courant de sortie du convertisseur de puissance suive la valeur de commande de courant de moteur à induction, sur la base du courant de sortie du convertisseur de puissance détecté à la première étape et de la fréquence de rotation de chacun des moteurs à induction qui est détectée ;
dans lequel, à la seconde étape, une magnitude de la valeur de commande de courant de moteur à induction est limitée de façon à limiter la surintensité des moteurs à induction due à une différence de diamètre de roue entre les roues entraînées par chacun des moteurs à induction, sur la base de la fréquence de rotation détectée à la première étape ; et
dans lequel, à la seconde étape, une magnitude de la valeur de commande de courant de moteur à induction est limitée de sorte qu'une valeur du courant qui circule vers le moteur à induction ayant une valeur absolue la plus élevée de fréquence de glissement, sur la base de la fréquence de rotation détectée à la première étape, devienne égale ou inférieure à une valeur qui serait celle du courant qui circule vers le moteur à induction s'il n'y avait aucune différence de diamètre de roue.

5. Procédé de commande d'un train électrique à moteur à induction selon la revendication 4, dans lequel, à la seconde étape, une magnitude de la valeur de commande de courant de moteur à induction est limitée lorsqu'une différence de diamètre de roue entre les roues respectives entraînées par les moteurs à induction, calculée sur la base de la fréquence de rotation détectée à la première étape, est égale ou supérieure à un seuil prédéterminé.

6. Procédé de commande d'un train électrique à moteur à induction selon la revendication 4 ou 5, dans lequel, à la seconde étape, une valeur de commande de courant d'une magnitude qui correspond à une opération de conduite du conducteur d'un train est générée, et la valeur de commande de courant générée est multipliée par un coefficient de correction (K) qui correspond à une différence de diamètre de roue entre les roues entraînées par les moteurs à induction respectifs, afin de générer la valeur de commande de courant de moteur à induction, et
le coefficient de correction est de 1 si une valeur maximale de la différence de diamètre de roue entre les roues respectives entraînées par la pluralité de moteurs à induction est inférieure à un seuil prédéterminé, et le coefficient de correction est une valeur inférieure à 1 si la valeur maximale est égale ou supérieure au seuil.
